## Europäisches Patentamt
## European Patent Office
## Office européen des brevets

(11) Numéro de publication: **0 043 053**
**B1**

(12) **FASCICULE DE BREVET EUROPEEN**

(45) Date de publication du fascicule du brevet: **11.06.86**

(51) Int. Cl.⁴: **F 02 P 5/04**

(21) Numéro de dépôt: **81104749.7**

(22) Date de dépôt: **22.06.81**

(54) **Procédé et dispositif de commande électronique d'allumage pour moteur à combustion interne.**

(30) Priorité: **26.06.80 FR 8014198**

(43) Date de publication de la demande:
**06.01.82 Bulletin 82/01**

(45) Mention de la délivrance du brevet:
**11.06.86 Bulletin 86/24**

(84) Etats contractants désignés:
**AT BE CH DE GB IT LI NL SE**

(56) Documents cités:
**FR-A-2 248 420**
**FR-A-2 382 700**
**FR-A-2 398 895**

(73) Titulaire: **REGIE NATIONALE DES USINES RENAULT**
**Boîte postale 103 8-10 avenue Emile Zola**
**F-92109 Boulogne-Billancourt (FR)**

(72) Inventeur: **Deleris, Robert**
**36, Square des Marroniers**
**F-78870 Bailly (FR)**
Inventeur: **Avian, Philippe**
**12, rue de la Cerisaie**
**F-78920 Ecquevilly (FR)**

(74) Mandataire: **Casalonga, Axel et al**
**BUREAU D.A. CASALONGA OFFICE JOSSE & PETIT Morassistrasse 8**
**D-8000 München 5 (DE)**

Courier Press, Leamington Spa, England.

EP 0 043 053 B1

## Description

La présente invention est relative à un procédé et à un dispositif de commande, électronique d'allumage pour un moteur à combustion interne, notamment pour un véhicule automobile.

La commande de l'allumage d'un moteur à explosion sous-entend la possibilité d'engendrer des impulsions d'allumage décalées par rapport au point mort haut d'une quantité qu'il convient de déterminer d'une façon appropriée pour parvenir à la bonne marche du moteur commandé.

Un système de ce type a été décrit et revendiqué dans le brevet français No. 2.327.421 déposée le 9 octobre 1975 et son certificat d'addition No. 2.349.041 déposé le 20 avril 1976 pour "procédé et dispositif de commande électronique d'allumage pour un moteur à combustion interne". Avec l'apparition de nouveaux types de moteurs à combustion interne associés à des contraintes de pollution et de garde au cliquetis plus limitées, il est de plus en plus difficile d'exploiter au maximum les performances escomptées.

En effet, si le système présente une certaine redondance du côté nombre de lois de correction de l'avance par la dépression, il est insuffisant par la forme de la loi de correction par la dépression realisée et par l'impossibilité de réaliser, sans moyen supplémentaire, des corrections d'avances limitées à une zone de pression/vitesse et déclenchées par des capteurs externes relevant les températures d'eau de la culasse du moteur ou d'air dans le collecteur d'admission.

On connaît par ailleurs, d'après le brevet FR—A—2 248 420, un calculateur d'allumage du même type dans lequel une entrée reçoit un signal dépendant d'autres paramètres, comme la température de l'eau de refroidissement. Cependant cette réalisation exige une mémoire de forte capacité pour l'enregistrement de tableaux à plusieurs dimensions.

La présente invention permet d'éviter ces inconvénients.

La présente invention permet de réaliser des lois de correction d'avance par la dépression adaptant mieux le moteur suivant des critères de consommation minimale, polluants minimaux, limite de cliquetis et stabilité de la combustion, en diminuant le nombre de lois de correction programmées mais en autorisant la prise en compte des informations en provenance des capteurs externes seulement dans des zones privilégiées de pression et de vitesse de rotation du moteur; on peut ainsi commander l'allumage de moteurs à explosion fonctionnant avec des carburants à indice d'octane faible vis-à-vis du taux de compression ou avec des dispositifs de suralimentation sans utilisation de dispositifs de correction d'avance en fonction du cliquetis; le système pouvant recevoir des signaux de correction d'avance en fonction du cliquetis sous forme de transmission série.

La présente invention peut avantageusement utiliser deux sous-ensembles tels que décrits par la demanderesse dans le brevets suivants publiés après la date de priorité de la présente demande, et qui'ne sont communiqués qu'en tant que documents d'information complementaire sur les dispositifs périphériques:

brevet français 2,446,467 déposée le 9 janvier 1979 pour "procédé et appareillage de repérage de la position angulaire d'une pièce animée d'un mouvement de rotation" et,

brevet français 2.474.597 déposée la 29 janvier 1979 pour "dispositif de commande de bobine d'allumage pour moteur à combustion interne équipé d'un calculateur d'avance électronique".

L'invention concerne un procédé de détermination de l'avance à l'allumage dans un moteur à combustion interne à allumage commandé par un calculateur du type comportant: un séquenceur, un dispositif de mesure de la vitesse de rotation comportant un premier compteur d'impulsions d'un train d'impulsions constituant un signal de vitesse pendant un premier temps de mesure déterminé par ledit séquenceur, un dispositif de mesure de la pression dans le collecteur d'admission comportant notamment un second compteur d'impulsions d'un train d'impulsions correspondant à la fréquence fournie par un capteur de pression pendant un second temps de mesure déterminé par ledit séquenceur, un ensemble de mémoires mortes, des moyens d'adressage des mémoires mortes à partir des premier et second compteurs, des moyens de calcul d'avance à partir de valeurs lues dans les mémoires mortes et des moyens d'introduction de corrections externes d'avance dépendant de paramètres extérieurs tels que la température, procédé caractérisé par l'exécution des opérations suivantes:

— enregistrer dans une première mémoire des coefficients de correction d'avance dans un ordre qui correspond aux segments de droite successifs représentant la courbe de correction d'avance à l'allumage en fonction de la pression dans le collecteur d'admission, chaque coefficient comprenant plusieurs chiffres binaires principaux, un chiffre binaire de signe de coefficient et un ou plusieurs chiffres binaires associés chacun à certaines au moins des corrections externes d'avance;

— enregistrer dans une seconde mémoire des valeurs d'avance à pleine charge;

— adresser la première mémoire en fonction du contenu desdits premier et second compteurs;

— adresser la seconde mémoire en fonction du contenu dudit premier compteur de vitesse;

— en fonction des valeurs de données extraites desdites première et secondes mémoires aux adresses ainsi déterminées, calculer une valeur corrigée d'avance;

— pour celles des corrections externes éventuelles pour lesquelles il n'est pas prévu de chiffre binaire associé, corriger ladite valeur corrigée par application desdites corrections externes;

— pour chacune de celles des corrections externes pour lesquelles il est prévu un chiffre binaire associé, n'appliquer cette correction externe que si ledit chiffre binaire associé l'autorise;

— enfin appliquer dispositif d'allumage du moteur la valeur définitive ainsi corrigée.

L'invention concerne également un calculateur pour la mise en oeuvre du procédé susvisé, dans lequel les moyens de calcul d'avance comprennent un compteur de calcul d'avance connecté, d'une part, aux sorties de la seconde mémoire d'avance en pleine charge, d'autre part, à la sortie de plus haut poids dudit second compteur de pression par l'intermédiaire de la connexion en série d'un multiplicateur de rythme binaire, d'un diviseur par un nombre entier M et d'un premier aiguilleur connecté à la sortie desdits moyens d'introduction des corrections externes d'avance, et un second aiguilleur relié par ses entrées aux sorties de la première mémoire de coefficients de correction d'avance et connecté par un premier groupe de sorties audit multiplicateur de rythme binaire et par un second groupe de sorties aux moyens d'introduction des corrections externes d'avance.

L'invention concerne en outre un calculateur du type précédent dans lequel ledit ensemble de mémoires mortes comprend une troisième mémoire morte de temps de conduction adressée à partir du premier compteur de vitesse.

L'invention concerne également un calculateur d'avance à l'allumage, du type susvisé, dans lequel une sortie dudit compteur de pression est connectée audit second aiguilleur et en ce que deux sorties dudit compteur de pression sont connectées en entrées sur un codeur d'adressage desdites mémoires mortes.

L'invention concerne également un calculateur d'avance à l'allumage du type précédent, dans lequel ledit second aiguilleur est connecté par une sortie supplémentaire à une entrée dudit premier aiguilleur pour transmettre le chiffre binaire correspondant au signe de la correction et en ce que ledit premier aiguilleur est connecté par ses sorties, d'une part, à l'entrée de comptage/décomptage, d'autre part, à l'entrée horloge du compteur du calcul d'avance.

L'invention concerne en outre un calculateur d'avance à l'allumage du type qui précède, dans lequel ledit compteur de pression comporte une entrée connectée à la sortie d'une première porte logique à fonction ET connectée par une première entrée audit séquenceur pour recevoir un créneau de mesure de pression, une seconde entrée reliée au capteur de pression et une troisième entrée connectée à la sortie d'un groupe de portes transmettant un signal de limitation de capacité et de synchronisation.

L'invention concerne également un calculateur d'avance à l'allumage du type précédent, dans lequel lesdits moyens d'adressage comprennent un codeur d'adressage de mémoires mortes à pas variable disposé entre ledit compteur de vitesse et lesdites mémoires mortes.

Enfin l'invention concerne également un calculateur d'avance à l'allumage du type qui précède, dans lequel ledit codeur d'adressage à pas variable comprend un troisième aiguilleur d'adresse vitesse/correction, puis un codeur d'adresses et un codeur de pas.

Suivant un mode de réalisation préféré, ledit codeur d'adressage à pas variable permet un changement de coefficients de correction d'avance dans le conditions suivantes: 1) de zéro à 1 600 tours/min tous les 200 tours/min; 2) de 1 600 à 3 200 tours/min tous les 400 tours/min; 3) de 3 200 à 6 400 tours/min tous les 800 tours/min.

La description qui suit n'est donnée qu'à titre d'exemple. Dans les dessins joints

la figure 1 représente, sous forme de schéma-bloc, un exemple de réalisation d'un calculateur d'avance à l'allumage incorporant le dispositif suivant l'invention;

la figure 2 représente un mode de réalisation détaillé du calculateur d'avance à l'allumage apparaissant à la figure 1;

la figure 3 représente sous forme d'ordinogramme le déroulement des tâches dans le calculateur de la figure 2;

la figure 4 illustre la courbe de correction d'avance à l'allumage en fonction de la pression dans une approximation à l'aide de huit segments de droite;

la figure 5 illustre un mode de réalisation d'un codeur d'adressage de mémoire morte à pas variable;

la figure 6 illustre un mode de réalisation plus détaillé des différentes cellules intervenant dans le codeur d'adressage de la figure 5;

la figure 7 illustre un mode de réalisation détaillé du premier aiguilleur utilisé à la figure 2; et

les figures 8 et 9 illustrent un mode de réalisation détaillé de circuits intervenant dans un second aiguilleur de la figure 2.

Les mêmes références numériques désignent les mêmes éléments sur les différentes figures.

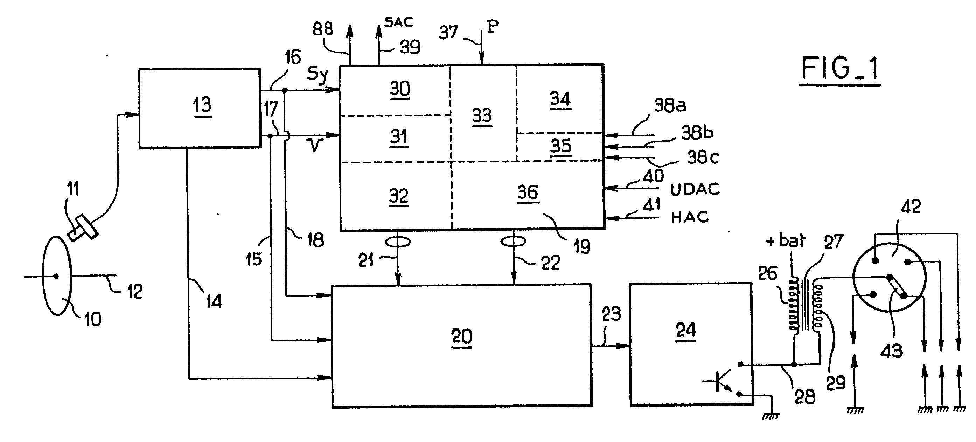

A la figure 1 qui représente, sous forme de schéma-bloc, un exemple de réalisation d'un calculateur d'avance à l'allumage incorporant le dispositif suivant l'invention, le calculateur d'avance à l'allumage 19 reçoit, sur une entrée 16 un signal de synchronisation Sy et, sur une seconde entrée 17, un signal vitesse V, signaux qui sont obtenus à partir d'un étage de traitement 13 du signal prélevé par un capteur 11 de position détectant le passage des dents dont est munie à sa périphérie une cible 10 fixée sur le vilebrequin 12 du moteur à combustion interne et tournant en synchronisme avec lui.

Le capteur 11 donne une image électrique permanente de la périphérie de la cible. Cet ensemble a été décrit dans le brevet français 2.448.467 mentionnée précédemment. Les parties essentielles du calculateur 19, objet de la présente invention, sont les suivantes: un séquenceur 30 délivrant notamment une information d'envoi de correction SAC d'avance à l'allumage en fonction du cliquetis par un conducteur de sortie 39; un étage de mesure de la vitesse 31; une mémoire morte 32; un étage de mesure de pression 33 raccordé à un capteur de pression extérieur par un conducteur d'entrée 37; un étage de sécurité 34 pour se prémunir contre tout incident de fonctionnement du calculateur 19; un étage de corrections 35 relié par trois conducteurs d'entrée 38a, 38b, 38c à des capteurs extérieurs à fonction binaire et un étage 36 de calcul proprement dit de l'angle d'avance à l'allumage recevant des informations de correction de l'angle d'avance en fonction du cliquetis par une entrée 41 d'impulsions série HAC et une entrée 40 de signe de correction d'avance en fonction du cliquetis UDAC.

Le calculateur 19 délivre pas ses sorties respectives 21 et 22 deux nombres binaires qui correspondent respectivement à l'angle de mise en conduction de la bobine 27 exprimé en nombre de dents de la cible 10 sur sa sortie 21 et à l'angle d'avance à l'allumage exprimé en nombre de dents de la cible 10 et en nombre de subdivisions d'entre deux dents de ladite cible sur sa sortie 22. Ces deux nombres binaires parviennent par les conducteurs 21 et 22 en entrée sur un bloc 20 de génération du signal de commande de la bobine 27, le bloc 20 reçoit aussi en entrée trois signaux par les conducteurs 14, 15, et 18 qui sont respectivement les dents de la cible 10 par 14, le signal de vitesse 15 qui est obtenu par les subdivisions d'entre deux dents de la cible 10 et le signal de synchronisation 18. Le bloc de génération 20 du signal de commande de la bobine fournit sur sa sortie 23 un signal de faible puissance qui est transmis à un étage de puissance amplificateur 24 dont la sortie 28 est reliée à la bobine d'allumage 27 ayant un enroulement primaire 26 et un enroulement secondaire 29 relié par une de ses extrémités à la partie centrale d'un distributeur 42 autour de laquelle tourne le bras mobile 43 qui met successivement en communication, au cours de sa rotation, le secondaire 29 de la bobine d'allumage 27 avec les bougies des différents cylindres du moteur pour provoquer l'explosion et la combustion du mélange contenu dans les cylindres. Ce dernier ensemble, comprenant le bloc 20 de génération du signal de commande de la bobine 27 et l'étage amplificateur de puissance 24, a été décrit dans le brevet français 2.474.597 mentionnée précédemment.

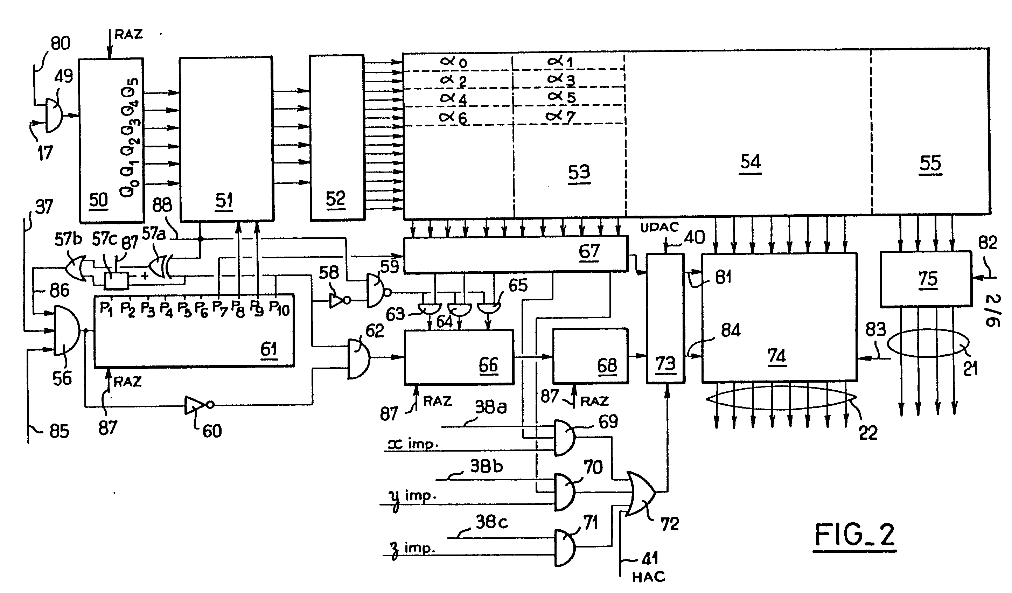

La figure 2 représente un mode de réalisation plus détaillé de l'étage de calcul proprement dit de l'angle d'avance à l'allumage désigné par la référence 19 à la figure 1 sans les éléments 30 et 34.

Cet étage de calcul comprend tout d'abord un compteur de vitesse 50 dans lequel on entre par l'intermédiaire d'une porte logique 49 à fonction ET connectée par une entrée au conducteur 17 transmettant le signal vitesse en provenance de l'étage de traitement 13 et recevant, par une second entrée 80, un créneau de mesure de vitesse sous la forme d'un signal de commande issu du séquenceur 30 de la figure 1 permettant une mesure pendant un temps déterminé par ledit séquenceur avec une valeur d'incrément de 100 tours/min. Le compteur 50 est, par exemple, in compteur à six chiffres binaires se verrouillant à sa valeur maximale dans le cas d'une mesure de vitesse supérieure à 6 300 tours/min. Le compteur de vitesse 50 est connecté par les sorties $Q_0$ à $Q_5$ aux entrées d'un codeur d'adressage 51 qui est connecté par ses sorties aux entrées d'un décodeur d'adresse 52.

La mémoire morté désignée par la référence 32 à la figure 1 comprend dans la présente réalisation de la figure 2, trois parties essentielles à savoir: une première mémoire morte 53 renfermant les coefficients de correction d'avance proprement dits; une seconde mémoire morte 54 d'avance pleine charge et une troisième mémoire morte 55 d'angle de conduction ou de temps de conduction. Ces trois mémoires mortes 53, 54 et 55 sont adressées soit directement pour les mémoires 54 et 55 par le compteur de vitesse 50 indiquant des vitesses entre zéro et 6 300 tours/min par l'intermédiaire du codeur d'adressage 51 et du décodeur d'adresse 52, soit indirectement pour la mémoire 53 par l'intermédiaire du codeur 51 faisant alors intervenir les quatre lignes de poids fort de la vitesse et deux chiffres pression. Les coefficients de correction d'avance dans la mémoire morte 53 sont codés sur trois chiffres binaires plus un chiffre binaire de signe pour la charge et deux chiffres binaires pour les conditions externes, chaque double groupe de six chiffres binaires ainsi défini pouvant être adressé et réparti différemment suivant les cas d'utilisation moteur en un groupe tous les 400 tours/min ou un groupe tous les 200 tours/min pour une zone nécessitant plus d'attention, ou un groupe tous les 800 tours/min pour une zone où la valeur d'avance présente moins de variations ou de discontinuité de pente.

La mémoire morte 54 représentant l'avance pleine charge est définie par huit chiffres binaires, le chiffre de plus faible poids valant un degré volant moteur et mémorisé en même temps que la valeur représentative du temps de conduction dans le compteur 74.

La troisième mémoire morte 55 dite de temps de conduction est connectée par ses sorties à un bascule à verrouillage 75 (Latch) mémorisant sur quatre chiffres binaires la valeur d'angle de conduction fournie par la mémoire 55 et transmise ultérieurement sur les sorties 21 au circuit 20 de la figure 1 générateur du signal de commande de la bobine 27.

La seconde mémoire morte 54 dite d'avance pleine charge est connectée par ses sorties à un compteur/décompteur 74 du calcul d'avance mémorisant sur huit chiffres binaires la valeur d'avance à l'allumage qui est transmise ultérieurement par ses sorties 22 au circuit 20 de la figure 1. Les sorties 21 de la bascule 75 et 22 du compteur 74 correspondent aux conducteurs 21 et 22 illustrés à la figure 1. Le compteur/décompteur 74 possède une première entrée 81 de comptage/décomptage; une seconde entrée horloge 84 et une entrée de chargement 83. La bascule à verrouillage 75 possède une entrée de chargement 82.

L'étage de calcul suivant la présente invention comprend par ailleurs un compteur de pression 61 qui, dans le mode de réalisation illustré, est un compteur à dix chiffres binaires synchrones du signal fréquence correspondant à la pression régnant dans le collecteur d'admission du moteur à combustion interne pendant le créneau de mesure de pression en provenance du séquenceur 30 de la figure 1 par un premier conducteur 85 parvenant au compteur 61 par l'intermédiaire d'une porte logique 56 à fonction ET qui est connectée par une seconde entrée au second conducteur 37 de la figure 1 raccordé au capteur de mesure de la pression régnant dans le collecteur d'admission et par un troisième conducteur 86 à un ensemble de portes 57a, 57b, 57c transmettant un signal de limitation de capacité et de synchronisation. L'ensemble de portes comprend une première porte logique 57a à fonction OU EXCLUSIF connectée par une de ses entrées à une sortie du codeur d'adressage 51, par une seconde entrée à la sortie $P_{10}$ du compteur de pression 61 et par sa sortie à une entrée de la seconde porte logique 57b à fonction OU qui est connectée par sa sortie 86 à une entrée de la porte logique 56 à fonction ET rencontrée précédemment.

La seconde entrée de la porte logique 57b est connectée à la sortie $\bar{Q}$ d'une bascule 57c de type D dont l'entrée D est reliée au plus batterie dont l'entrée horloge est reliée à la sortie $P_{10}$ du compteur de pression 61 et dont l'entrée de remise à zéro est connectée à la remise à zéro 87 d'un multiplicateur de rythme binaire 66. Le compteur de pression 61 comporte dix sorties numérotées de $P_1$ à $P_{10}$. Les sorties $P_8$ et $P_9$ sont connectées en parallèle à des entrées du codeur d'adressage 51.

La sortie $P_{10}$, en plus de ses connexions à la porte logique 57a et à la bascule 57c, est connectée, d'une part, à une première entrée d'une porte logique 59 à fonction NON-ET par l'intermédiaire d'un inverseur 58, d'autre part, à une première entrée d'une porte logique 62 à fonction ET, cette dernière connectée par une seconde entrée à la sortie de la porte logique 56 à fonction ET déjà rencontrée par l'intermédiaire d'un inverseur 60 et, par ailleurs, par sa sortie à une entrée du multiplicateur de rythme binaire 66 déjà mentionné. La sortie $P_7$ du compteur de pression 61 est connectée à une entrée de déclenchement d'un étage 67 choix de coefficient qui est connecté, par ailleurs, par sa série d'entrées supérieures aux sorties de la mémoire morte 53 dans laquelle sont emmagasinés les coefficients de correction d'avance par deux groupes de six chiffres binaires comme précédemment mentionné. Cet étage 67 de choix de coefficient est connecté par trois premières sorties en parallèle sur les premières entrées de trois portes logiques 63, 64, 65 à fonction ET connectées toutes les trois en parallèle par leur seconde entrée à la sortie de la porte logique 59 à fonction NON-ET et par leurs sorties en parallèle sur trois entrées du multiplicateur de rythme binaire 66 pour y introduire les trois chiffres binaires du coefficient de correction d'avance sélectionné dans la mémoire morte 53. La seconde entrée de la porte logique 59 à fonction NON-ET est connectée à une sortie du codeur d'adressage 51 et à une entrée de la porte logique 57a à fonction OU EXCLUSIF. La sortie latérale droite de l'étage 67 de choix du coefficient est reliée à l'entrée "SIGNE" d'un étage 73 permettant de déterminer le signe de la correction pression. Sur une seconde entrée, l'étage 73 est relié au conducteur 40 déjà mentionné à la figure 1 pour recevoir un signal UDAC, à savoir le signe de correction d'avance en fonction du cliquetis.

Revenant au multiplicateur de rythme binaire 66 portant sur trois chiffres binaires dans l'exemple représenté la sortie de ce dernier est connectée à l'entrée d'un étage 68 diviseur par M qui, dans l'exemple représenté, est un diviseur par huit et dont la sortie est reliée à une seconde entrée de l'étage 73 ci-dessus mentionné. Cet étage 73 est connecté par sa troisième entrée située à sa partie inférieure à la sortie d'une porte logique 72 à fonction OU à quatre entrées reliées respectivement pour les trois premières aux sorties respectives de trois portes logiques 69, 70, 71 à fonction ET et pour la quatrième au conducteur 41 apparaissant déjà à la figure 1 et qui transmet des impulsions série de correction d'avance à l'allumage en fonction du cliquetis, impulsions engendrées par l'horloge anticliquetis de l'installation. Sur chacune des trois portes logiques 69, 70, 71 à fonction ET, le conducteur supérieur sert à véhiculer l'ordre de correction éventuel correspondant provenant de l'extérieur, le conducteur inférieur sert à recevoir respectivement $x$ impulsions pour la porte 69, $y$ impulsions pour la porte 70 et $z$ impulsions pour la porte 71 qui sont fournies par le séquenceur 30 de la figure 1 et le conducteur intermédiaire, dans le cas des portes 69 et 70, est relié à une sortie de l'étage 67 de choix du coefficient. L'étage 73 permettant de déterminer "le type de correction pression-correction externe anticliquetis" est connecté par ses deux sorties 81 et 84 respectivement à l'entrée de comptage/décomptage et à l'entrée horloge du compteur du calcul d'avance 74 à huit chiffres binaires. Le compteur 74 et la bascule à verrouillage 75 ont des entrées de chargement numérotées respectivement 83 et 82 connectées au séquenceur 30 de la figure 1. L'étage 73 permettant de déterminer "le type de correction" est réalisé à l'aide d'un circuit ultérieurement décrit.

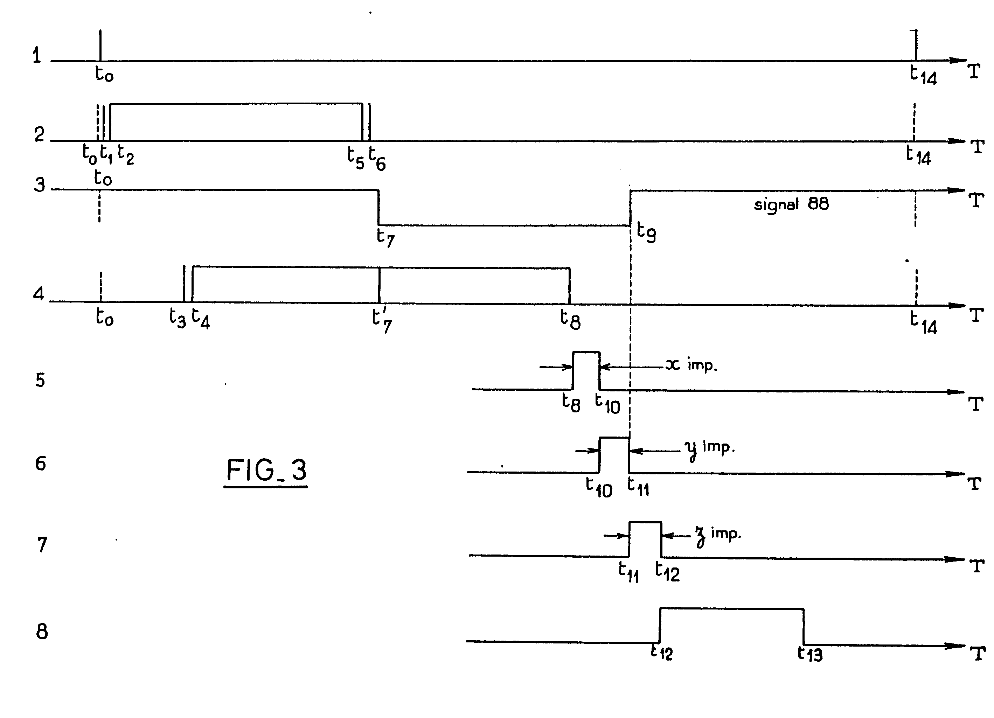

On explique le fonctionnement du dispositif de commande électronique d'allumage pour moteur à combustion interne et, plus particulièrement, le fonctionnement du calculateur d'avance illustré aux figures 1 et 2 en se référant à la figure 3 qui représente, sous forme d'ordinogramme, le déroulement des tâches dans le bloc calculateur. A la ligne 1 donnant les temps en abscisses, comme sur toutes les autres lignes de la figure 3, on a représenté deux impulsions Sy intervenant respectivement à un point mort haut ou à un point mort bas et successivement en définissant, par conséquent, entre elles un intervalle de temps correspondant à un cycle complet de calcul de l'angle d'avance par le calculateur 19. Chaque impulsion de synchronisation Sy est transmise par les conducteurs 16 et 18 de la figure 1 au séquenceur 30 et à l'étage 20 de génération du signal de commande de la bobine 27. L'émission de l'impulsion de synchronisation Sy au temps $t_0$ déclenche le chargement de la bascule à verrouillage 75 et du compteur de calcul d'avance 74 par les entrées de chargement respectives 82 et 83. A l'instant $t_1$, ligne 2—figure 3, se produit le retour à zéro du compteur de vitesse 50 par action sur son entré RAZ et la mesure de la vitesse du véhicule s'effectue entre les instants $t_2$ très voisin de $t_1$ et $t_5$ par comptage du signal de vitesse V sur la porte logique 49. A l'instant $t_6$ proche de $t_5$, le séquenceur 30 déclenche le chargement du compteur de calcul d'avance 74 à partir de la mémoire 54 et la mémorisation du temps de conduction dans 75. La ligne 3 de la figure 3 illustre les instants $t_7$ et $t_9$ (signal 88) auxquels le séquenceur 30 déclenche l'adressage composite vitesse/pression des mémoires mortes 53 des coefficients de correction.

La ligne 4 de la figure 3 illustre le processus de correction d'avance à l'allumage qui tient compte de la dépression dans le collecteur d'admission du moteur à combustion interne. A l'instant $t_3$, le séquenceur 30 provoque le retour à zéro du multiplicateur de rythme binaire 66, du diviseur par huit 68 du compteur 61 et de 57c et, à l'instant $t_4$, commence le processus de correction d'avance en fonction de la pression. Cette correction d'avance dure, par exemple, 2,56 ms et comprend deux phases successives: une première phase d'attente comprise entre les instants $t_4$ et $t_7$ durant laquelle 512 impulsions sont comptées dans la compteur 61 durant un temps allant de 1,28 ms pour une pression de 400 KHz à 2,56 ms pour une pression de 200 KHz; une seconde phase de correction proprement dite pendant le temps qui s'écoule de $t'_7$ à $t_8$; $t'_7$ est un instant variable compris entre $t_7$ et $t_8$ et qui dépend de la pression dans le collecteur d'admission.

La mesure de la pression est réalisée par comptage dans le compteur 61 à dix chiffres binaires du signal fréquence/pression dans le collecteur d'admission pendant le créneau $t_4$ $t_7$ provenant du séquenceur 30. La fréquence du signal du capteur de pression varie de 200 KHz pour la pleine charge à 400 KHz pour la pleine dépression collecteur. Un comptage pendant 1,28 ms est d'abord effectué dans le compteur 61 avant d'obtenir par le séquenceur 30 un signal à l'instant $t_7$ autorisant les correction d'avance par le charge moteur et entrant dans l'ensemble de portes 57 par l'entrée 88 à la figure 2, lequel ensemble 57 voit également la sortie P10 du compteur 61 qui passe à "un" lorsque le compteur 61 s'est incrémenté 512 fois. Cet ensemble de portes 57 permet, d'une part, de limiter la valeur de correction dans le cas où, pour une raison quelconque, le capteur de pression et sont électronique associée délivrent une fréquence supérieure à 400 KHz, d'autre part, il permet de synchroniser l'ensemble séquenceur, fréquence pression et les corrections de la valeur d'avance pour des valeurs comptées de 512 à 1 024 par le compteur de pression 61, et donc, pour des fréquences comprises entre 200 et 400 KHz.

Ces 512 impulsions possibles comprises entre 512 et 1 024 lorsque la fréquence délivrée par le capteur de pression est de 400 KHz (pleine dépression dans le collecteur d'admission du moteur à combustion interne) sont décomposées en huit fois 64 impulsions, ces groupes de 64 impulsions étant envoyés via la porte logique inverseuse 60 et la porte logique ET 62 au multiplicateur 66 et les huit groupes, déterminés par les sorties $P_7$ à $P_9$ du compteur 61, permettant le choix des huit coefficients a0 à a7 dans la mémoire 53.

Les corrections sont autorisées lorsque la sortie $P_{10}$ du compteur 61 est passée à "un" en commandant l'arrivée du coefficient provenant de la ROM 53 via les portes 58, 59, 63, 64, 65 et en laissant entrer par la porte 62 le signal fréquence-pression inversé par la porte 60 dans le multiplieur de fréquence programmable 66 qui assure le calcul du nombre représentatif de la correction par la charge du moteur, par la multiplication *de n* impulsions de la fréquence-pression et de la valeur du coefficient de correction compris entre zéro et sept (codé sur trois chiffres binaires) le *nombre n* étant compris entre zéro et 64 pour chaque secteur de correction choisi par la valeur de la pression.

Pour une exploration de toutes les charges possibles du moteur, on a donc *n* allant de zéro à sept fois 64 impulsions plus un nombre p compris entre zéro et 64 pour le dernier segment, le choix des coefficients étant adressé par les chiffres binaires 7, 8 et 9 ($P_7$, $P_8$, $P_9$) du compteur de pression 61 et les 64 impulsions de chaque coefficient de correction étant converties en une valeur comprise entre zéro et 56 par pas de huit impulsions suivant que le coefficient de correction est compris entre zéro et sept ce qui, après division par huit dans le diviseur 68, donne des corrections allant de zéro à sept degrés par valeurs entières de un degré à chaque fois, soit un total de correction possible de 56 degrés volant moteur pour les huit segments de correction. Ces impulsions de correction sont ensuite dirigées vers l'aiguilleur 73 qui prend également en compte le sens (ou signe) de la correction à effectuer provenant de l'aiguilleur des coefficients 67, ledit aiguilleur 73 recevant, par ailleurs, le signal des corrections diverses par une porte 72 à fonction OU et dirigeant toutes les corrections vers l'entrée horloge d'un compteur de calcul d'avance 74 ayant, avant d'opérer les corrections diverses, été chargé avec la valeur d'avance correspondant à la pleine charge, issue de la ROM correspondante 54 adressée tous les 100 tours/min par le compteur de vitesse 50.

Les corrections diverses provenant de la porte 72 sont commandées par des organes externes, tels que thermocontacts, etc. et leurs valeurs sont fixées dans le séquenceur 30 par une porte laissant passer x, y ou z impulsions lorsque l'organe extérieur indique un état de charge ou de température nécessitant une correction bien définie et, sur les corrections No 1 et 2, pour une condition supplémentaire pouvant être fonction de la charge moteur ou de la vitesse ou bien des deux à la fois, ceci afin de mieux cerner les fonctionnements particuliers, ces conditions étant elles-mêmes programmées au même titre que les coefficients de corrections en fonction de la charge dans la ROM 53. La porte 72 reçoit également le signal de correction de cliquetis par une entrée 41 reliée à l'horloge anticliquetis générée par un système externe, le signe de la correction étant pris en compte par l'aiguilleur 73. Les lignes 5, 6, 7, 8 à la figure 3 illustrent la succession des corrections diverses. La ligne 5 correspond, par exemple, à une correction No 1 consistant en l'envoi de x impulsions par l'intermédiaire de la porte logique 69. Il en est de même aux lignes 6 et 7 qui correspondent à l'envoi de y et de z impulsions respectivement par l'intermédiaire des portes 70 et 71. Enfin, la ligne 8 correspond à l'autorisation d'envoi d'impulsions d'anticliquetis par le conducteur 41 pendant les temps $t_{12}$ $t_{13}$ en un signal fourni au système externe de traitement cliquetis par le séquenceur 30. En $t_{14}$ survient une nouvelle impulsion de synchronisation Sy correspondant au début d'un nouveau cycle de calcul.

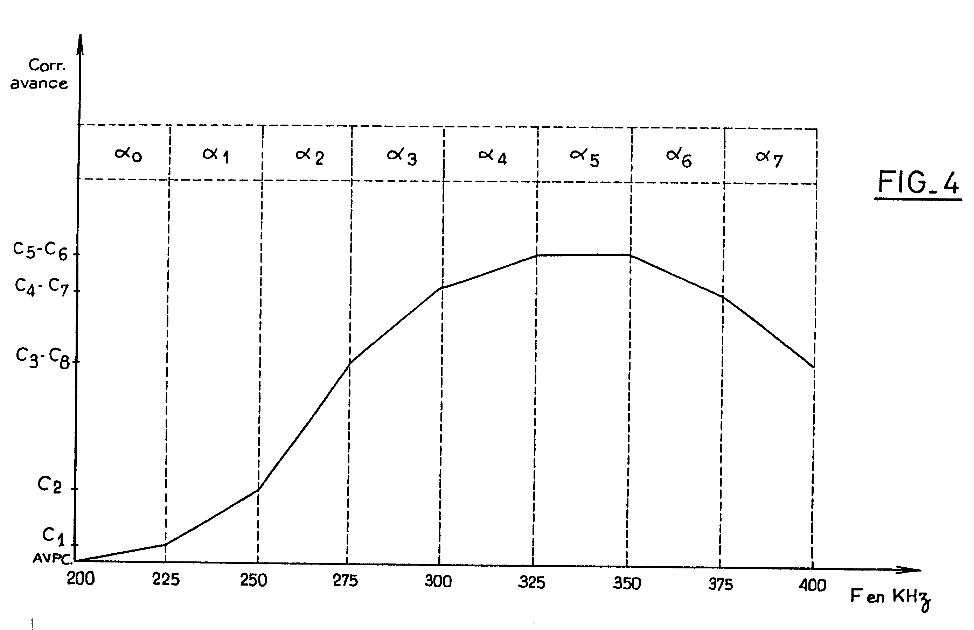

La figure 4 illustre la courbe de correction d'avance à l'allumage en fonction de la fréquence en KHz, mesurée par le capteur de pression dans le collecteur d'admission pour des fréquences comprises entre 200 et 400 KHz, la fréquence de 200 KHz correspondant à l'avance à pleine charge et étant confondue avec le zéro des coordonnées. La courbe elle-même a été remplacée par huit segments de droite successifs correspondant chacun à un intervalle de variation en fréquence de 25 KHz et l'ensemble des coefficients de correction d'avance correspondant à un segment de droite déterminé $a_0$ à $a_7$ se retrouve à un emplacement déterminé par une adresse dans la mémoire des coefficients de correction d'avance 53.

La charge du moteur à combustion interne est représentée par la dépression régnant dans les tubulures d'admission dudit moteur à combustion interne. La dépression traitée par un capteur tel qu'utilisé dans l'allumage électronique intégral fournit, en fonction de ladite dépression, un signal de fréquence variable. Cette fréquence varie de 200 KHz pour la pleine charge qui peut être une surpression dans le cas d'utilisation d'un turbo-compresseur pour la suralimentation dudit moteur à combustion interne et passe progressivement jusqu'à une fréquence de 400 KHz pour la pleine dépression collecteur d'admission c'est-à-dire lorsque le moteur à combustion interne agit en frein-moteur. Les différentes charges doivent donc occasionner différentes avances à l'allumage et cela également en fonction du régime du moteur à combustion interne afin de permettre une pollution moindre tout en conservant les performances. Le système à huit pentes permet d'explorer l'espace représentant la charge du moteur avec huit segments de droite correspondant chacun à une exploration en fréquence de 25 KHz et donc, pour un moteur à combustion interne non suralimenté, à une variation de dépression de l'ordre de 100 mbars. Suivant la valeur exacte de la dépression, les segments sont parcourus à partir du point pleine charge par pas de un degré volant, avec une capacité de zéro à sept degrés volant suivant la valeur du coefficient du segment considéré et les segments parcourus s'ajoutent algébriquement jusqu'à la valeur finale de comptage de dépression qui peut se trouver n'importe où sur un segment et fournit, par conséquent, une correction appropriée aux conditions de régime et charge du moteur à combustion interne.

L'adressage mérite une attention particulière: les mémoires mortes d'avance pleine charge 54 et d'angle de conduction 55 sont adressées directement par le compteur de vitesse 50 indiquant les vitesses entre zéro et 6 300 tours/min; par contre, les coefficient de correction pour la charge et les conditions de correction externes sont codés sur trois chiffres binaires plus un chiffre binaire de signe pour la charge et deux chiffres binaires pour les conditions externes, chaque groupe de six chiffres binaires ainsi défini pouvant être adressé et réparti différemment suivant les cas d'utilisation moteur en un groupe tous les 400 tours/min ou un groupe tous les 200 tours/min pour une zone nécessitant plus d'attention et 800 tours/min pour des zones où la valeur d'avance présente moins de variations ou de discontinuité de pente en liaison avec la courbe de la figure 4.

Cette différence entre adressage d'avance pleine charge, angle de conduction bobine et adressage des coefficients de pente de correction nécessite un codage spécial pouvant être décrit comme suit: un adressage sur les six chiffres binaires de la vitesse mesurée allant directement aux ROM d'avance 54 et de l'angle de conduction 55 et acquisition immédiatement après le mesure de vitesse puis codage composite faisant intervenir, d'une part, les quatre chiffres binaires de fort poids de la vitesse et, d'autre part, les deux chiffres binaires de fort poids de la pression, l'ensemble conservant les six lignes d'adresse et permettant l'acquisition de groupe de deux valeurs de coefficients de correction de charge, lesquelles sont ensuite choisies par le chiffre binaire $P_7$ de la mesure de pression via l'aiguilleur 67, ce qui donne, dans l'ensemble, un adressage tous les 100 tours/min pour l'avance pleine charge et l'angle de conduction et un adressage tous les 400 tours/min pour les corrections de charge avec huit coefficients pour chaque espace de 400 tours/min qui eux, sont adressés par la pression, le tout permettant une partie commune pour un ensemble complexe et volumineux qu'est le décodeur d'adresse d'une mémoire.

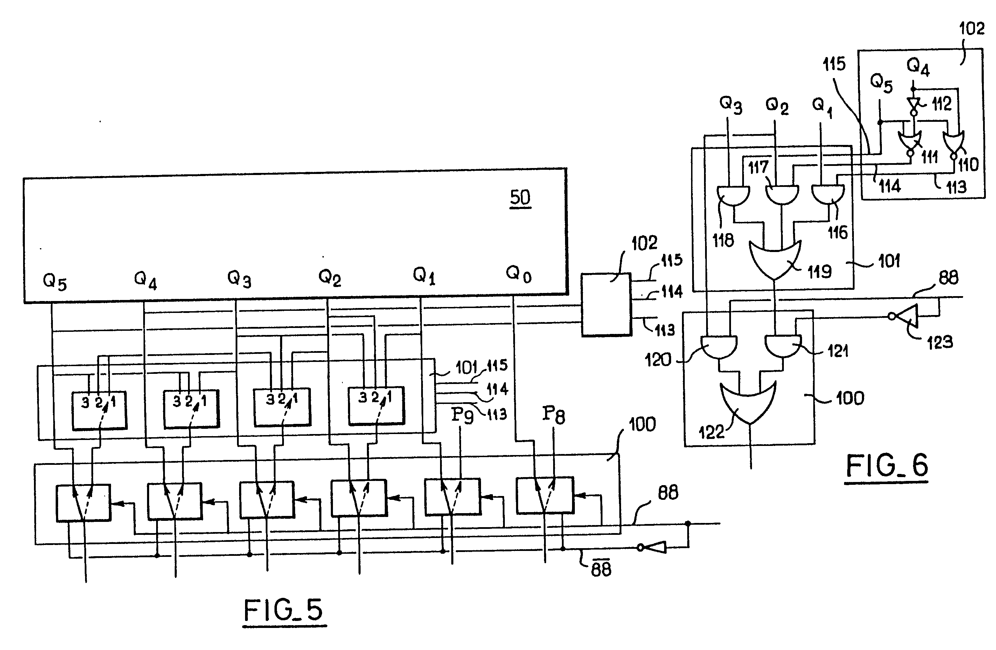

Dans certaines utilisations moteur, il peut être nécessaire de répartir différemment les zones de correction de charge moteur et donc, par voie de conséquence, de modifier le codeur d'adresse de coefficients de charge. Un exemple est fourni en figure 5 dans lequel l'invention concerne un adressage à pas variable pour les valeurs des coefficients de charge allant d'un pas tous les 200 tours/min de zéro à 1 600 tours/min, tous les 400 tours/min de 1 600 tours/min à 3 200 tours/min et tous les 800 tours/min de 3 200 à 6 400 tours/min, ceci en occupant le même espace mémoire et permettant une meilleure définition pour des régimes où la variation de charge entraîne des variations d'avance importantes avec des profils différents pour des zones de régime rapprochées.

Dans cet exemple, le codage de l'adresse s'effectue via un premier aiguilleur 100 vitesse/correction permettant d'adresser l'ensemble des mémoires 54 et 55 par la vitesse et les coefficients de charge par une adresse composite vitesse/pression, cette adresse composite étant obtenue par les chiffres de fort poids de la pression comme dans le principe précédent plus quatre chiffres provenant d'un second aiguilleur 101 faisant intervenir les sorties $Q_1$, $Q_2$, $Q_3$, $Q_4$, donc les valeurs changeant tous les 200 tours/min lorsque ces sorties ($Q_0$ à $Q_5$) indiquent des valeurs comprises entre zéro et 1 600 tours/min à cet aiguilleur, ceci par l'intermédiaire d'un codeur supplémentaire 102, ledit aiguilleur 101, pour des commandes de pas différent, assure la liaison des sorties $Q_2$, $Q_3$, $Q_4$, $Q_5$ enfin, pour des pas de 800 tours/min, l'aiguilleur de codage fait intervenir les sorties $Q_3$, $Q_4$ et deux fois $Q_5$.

La figure 6 illustre un mode de réalisation plus détaillé des différentes cellules intervanant dans le codeur d'adresse à par variable de la figure 5 et permet, du même coup, d'en expliquer le fonctionnement d'une façon plus précise. Une première cellule 102, qui est le codeur de pas comprenant des portes logiques 110 et 111 à fonction NON-OU et un inverseur 112, permet de savoir, suivant les sorties $Q_4$ et $Q_5$ du compteur de vitesse 50, si la vitesse est comprise entre zéro et 1 600 tours/min par sa sortie 113, si elle est comprise entre 1 600 et 3 200 tours/min par sa sortie 114 et, enfin, si elle est supérieure à 3 200 tours/min par sa sortie 115. Lorsque la vitesse est inférieure à 1 600 tours/min, les sorties $Q_4$ et $Q_5$ sont à zéro et la sortie 113 est à un, les sorties 114 et 115 restant à zéro. Lorsque la vitesse est comprise entre 1 600 tours/min et 3 200 tours/ min, la sortie $Q_5$ est à zéro tandis que $Q_4$ est à un, ce qui, par la porte inverseuse 112, permet de trouver des niveaux zéro les deux entrées de la porte 111 et donc un niveau logique un sur sa sortie 114. Au-dessus de 3 200 tours/min, la sortie

$Q_5$ est à un et bloque les signaux sur les sorties 113 et 114 tandis que le niveau sur le conducteur 115 est à un.

A partir de ces sélections de vitesse, on vient, par des portes logiques 116, 117, 118 à fonction ET de l'étage 101 codeur d'adresse, choisir parmi une des lignes de vitesse nécessaires au codage d'adresse suivant une proposition de codage variable, à savoir que le chiffre binaire $Q_1$, permettant dans le cas présent un adressage tous les 200 tours/min d'une série de 4×2 coefficients $a_0$ à $a_7$ dans la mémoire morte 53, est aiguillé vers une porte logique 119 à fonction OU à trois entrées lorsque le signal sur le conducteur 113 est à l'état logique un et donc autorise via la porte logique 116 l'adresse $Q_1$ à passer alors que les autres adresses $Q_2$ et $Q_3$ sont interdites par les signaux apparaissant sur les conducteurs 114 et 115 et les portes 117 et 118. Le même principe est utilisé pour choisir soit la sortie vitesse correspondant à l'adressage des mémoires mortes avance pleine charge 54 et angle de conduction 55, soit une sortie choisie suivant le codage désiré par un ensemble de portes logiques 120, 121, 122 et 123 appartenant à l'aiguilleur 100 d'adresse vitesse/correction. La porte 120 qui est une porte logique à fonction ET à deux entrées est connectée, d'une part à la ligne $Q_2$ provenant du compteur de vitesse 50 devant normalement servir à l'adressage normal de la ROM avance PC 54 et angle de conduction 55 et, d'autre part, au conducteur 88 véhiculant un signal indiquant par l'état logique un que le système effectue une mesure de vitesse et par l'état zéro une correction de charge. Ce même signal, inversé dans l'inverseur 123, autorise, lorsqu'il est à un après l'inverseur 123, les adresses codées sortant de la porte OU 119 à parvenir à l'entrée de la porte logique 122 à fonction OU à deux entrées.

En sortie de ladite porte 122, on a donc l'adressage normal lorsque le signal V/C est à l'état logique un et l'adresse codée suivant la vitesse lorsque le signal V/C est à l'état logique zéro, c'est-à-dire lorsque les corrections d'avance en fonction de la charge sont à effectuer.

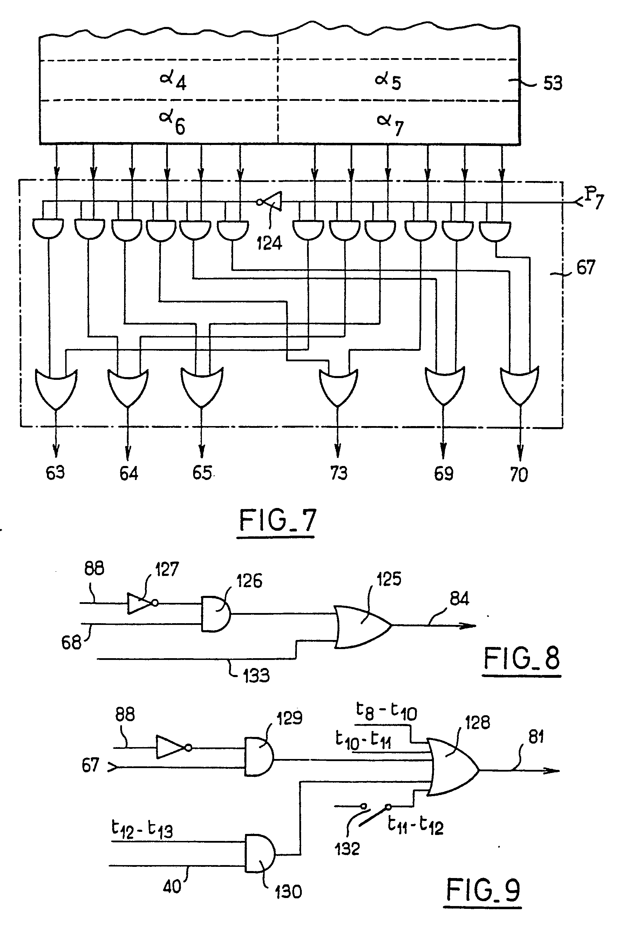

La figure 7 illustre un mode de réalisation détaillé de l'aiguilleur 67 de la figure 2 qui est située entre les sorties de la mémoire morte 53 renfermant les coefficients de correction d'avance $a$, la sortie $P_7$ du compteur de pression 61 et six entrées en direction, à savoir, de gauche à droite: des trois portes logiques 63, 64 et 65 à fonction ET de la figure 2, de l'aiguilleur 73 pour lui transmettre le signe de la correction pression et deux portes logiques 69 et 70 à fonction ET de la figure 2 pour leur transmettre respectivement la condition 1 et la condition 2 correspondant aux signaux des lignes 5 et 6 de la figure 3. Le principe de réalisation est le même que celui qui a présidé à la constitution d'une cellule de l'aiguilleur 100 d'adresse vitesse/correction illustré à la figure 6, laquelle est constituée de deux portes logiques à fonction ET reliées aux entrées d'une porte logique à fonction OU.

La figure 7 montre immédiatement que, d'une manière analogue, l'aiguilleur 67 est composé de six portes logiques à fonction OU dont la sortie de chacune constitue une sortie de l'aiguilleur et dont les fonctions ont été rappelées ci-dessus, chaque porte logique à fonction OU étant associée par ses entrées à deux portes logiques à fonction ET. On utilisé donc au total douze portes logiques à fonction ET reliées chacune respectivement par une entrée à une sortie de la mémoire morte 53, d'une part, et, d'autre part, toutes en parallèle par leur seconde entrée à la sortie $P_7$ du compteur de pression 61 avec interposition d'un inverseur 124 entre les six premières et les six suivantes.

Les figures 8 et 9 illustrent un mode de réalisation détaillé des parties essentielles de l'aiguilleur 73 de la figure 2 qui est situé entre les sorties de l'aiguilleur 67, de l'étage 68 diviseur par huit, de la sortie de la porte logique 72 à fonction OU transmettant les corrections conditionnelles supplémentaires illustrées aux lignes 5 à 8 de la figure 3 et les entrées 81 et 84 du compteur 74 de calcul d'avance à huit chiffres binaires.

Suivant la représentation de la figure 8, la partie de l'aiguilleur 73 qui est reliée à sa sortie 84 et que l'on peut qualifier de porte des horloges, comprend en sortie une porte logique 125 à fonction OU reliée par une de ses entrées 133 à la sortie de la porte logique 72 et par sa seconde entrée à la sortie d'une porte logique 126 à fonction ET à deux entrées reliées respectivement à la sortie de l'étage 68 diviseur par huit et à l'entrée 88 transmettant, par l'intermédiaire d'un inverseur 127, le signal d'autorisation de laisser passer les impulsions de correction de charge provenant du diviseur par huit 68.

Suivant la représentation de la figure 9, la partie de l'aiguilleur 73 qui est reliée à sa sortie 81 transmet les signes de correction lorsque les impulsions de correction correspondantes sont transmises par les portes des horloges. Le signe de corrections externes provenant des portes 69, 70 et 71, figure 2, est toujours positif. Donc les créneaux correspondants et provenant du séquenceur 30 sont additionnés logiquement par une porte OU 128 à cinq entrées dont deux entrées sont reliées aux sorties correspondantes de deux portes logiques 129 et 130 à fonction ET. En se reportant à la figure 3, lignes 5 à 8, on identifie les différentes corrections dont les signes sont transmis par quatre des cinq entrées de la porte OU 128, la cinquième entrée étant reliée à la sortie de l'aiguilleur 67 pour en recevoir le signe. Seule la correction provenant de la porte logique 71, figure 2, peut être programmée pour permettre des corrections positives ou négatives via un interrupteur 132 qui permet de réaliser des corrections positives lorsqu'il est fermé et négatives lorsqu'il est ouvert.

## Revendications

1. Procédé de détermination de l'avance à l'allumage dans un moteur à combustion interne à allumage commandé par un calculateur du type comportant: un séquenceur (30), un dispositif (49, 50) de mesure de la vitesse de rotation comportant un premier compteur (50) d'impulsions d'un train d'impulsions constituant un signal de vitesse pendant un premier temps de mesure déterminé par ledit séquenceur (30), un dispositif (56, 57, 61) de mesure de la pression dans le collecteur d'admission comportant notamment un second compteur (61) d'impulsions d'un train d'impulsions correspondant à la fréquence fournie par un capteur de pression pendant un second temps de mesure déterminé par ledit séquenceur (30), un ensemble de mémoires mortes (53, 54), des moyens (51, 52) d'adressage des mémoires mortes à partir des premier et second compteurs (50, 61), des moyens (66—68, 73, 74) de calcul d'avance à partir de valeurs lues dans les mémoires mortes (53, 54) et des moyens (69—72, 41) d'introduction de corrections externes d'avance dépendant de paramètres extérieurs tels que la température, procédé caractérisé par l'exécution des opérations suivantes:

— enregistrer dans un première mémoire (53) des coefficients de correction d'avance dans un ordre qui correspond aux segments de droite successifs représentant la courbe de correction d'avance à l'allumage en fonction de la pression dans le collecteur d'admission, chaque coefficient comprenant plusieurs chiffres binaires principaux, un chiffre binaire de signe de coefficient et un ou plusieurs chiffres binaires associés chacun à certaines au moins des corrections externes d'avance;

— enregistrer dans une seconde mémoire (54) des valeurs d'avance à pleine charge;

— adresser la première mémoire (53) en fonction du contenu desdits premier et second compteurs (50, 61);

— adresser la seconde mémoire (54) en fonction du contenu dudit premier compteur de vitesse (50);

— en fonction des valeurs de données extraites desdites première et secondes mémoires (53, 54) aux adresses ainsi déterminées, calculer une valeur corrigée d'avance;

— pour celles des corrections externes éventuelles pour lesquelles il n'est pas prévu de chiffre binaire associé, corriger ladite valeur corrigée par application desdites corrections externes;

— pour chacune de celles des corrections externes pour lesquelles il est prévu un chiffre binaire associé, n'appliquer cette correction externe qui si ledit chiffre binaire associé l'autorise;

— enfin appliquer au dispositif d'allumage du moteur la valeur définitive ainsi corrigée.

2. Calculateur d'avance à l'allumage pour la mise en oeuvre du procédé selon la revendication 1, caractérisé en ce que les moyens de calcul d'avance comprennent un compteur (74) du calcul d'avance connecté, d'une part, aux sorties de la seconde mémoire (54) d'avance pleine charge, d'autre part, à la sortie (P$_{10}$) de plus haut poids dudit second compteur de pression (61) par l'intermédiaire de la connexion en série d'un multiplicateur de rythme binaire (66), d'un diviseur (68) par un nombre entier (M) et d'un premier aiguilleur (73) connecté à la sortie desdits moyens (69, 70, 71, 72, 41) d'introduction des corrections externes d'avance, et un second aiguilleur (67) relié par ses entrées aux sorties de la première mémoire (53) de coefficients de correction d'avance et connecté par un premier groupe de sorties (63, 64, 65) audit multiplicateur de rythme binaire (66) et par un second groupe de sorties aux moyens (69—72) d'introduction des corrections externes d'avance.

3. Calculateur suivant la revendication 2, caractérisé en ce que ledit ensemble de mémoires mortes comprend une troisième mémoire morte (55) de temps de conduction adressée à partir du premier compteur (50) de vitesse.

4. Calculateur d'avance à l'allumage suivant la revendication 2, caractérisé en ce qu'une sortie (P$_7$) dudit compteur de pression (61) est connectée audit second aiguilleur (67) et en ce que deux sortes (P$_8$ et P$_9$) dudit compteur de pression (61) sont connectées en entrées sur un codeur (51) d'adressage desdites mémoires mortes (53, 54, 55).

5. Calculateur d'avance à l'allumage suivant la revendication 4, caractérisé en ce que ledit second aiguilleur (67) est connecté par une sortie supplémentaire à une entrée dudit premier aiguilleur (73) pour transmettre le chiffre binaire correspondant au signe de la correction et en ce que ledit premier aiguilleur (73) est connecté par ses sorties d'une part, à l'entrée de comptage/décomptage, d'autre part, à l'entrée horloge du compteur du calcul d'avance (74).

6. Calculateur d'avance à l'allumage suivant l'une quelconque des revendications 2 à 5, caractérisé en ce que ledit compteur de pression (61) comporte une entrée connectée à la sortie d'une première porte logique (56) à fonction ET connectée par une première entrée (85) audit séquenceur (30) pour recevoir un créneau de mesure de pression, une seconde entrée (37) reliée au capteur de pression et une troisième entrée (86) connectée à la sortie d'un groupe de portes (57) transmettant un signal de limitation de capacité et de synchronisation.

7. Calculateur d'avance à l'allumage suivant l'une quelconque des revendications 2 à 6, caractérisé en ce que lesdits moyens d'adressage comprennent un codeur d'adressage (100, 102) de mémoires mortes à pas variable disposé entre ledit compteur de vitesse (50) et lesdites mémoires mortes (53, 54, 55).

8. Calculateur d'avance à l'allumage suivant la revendication 7, caractérisé en ce que ledit codeur d'adressage à pas variable comprend un troisième aiguilleur (100) d'adresse vitesse/correction, puis un codeur d'adresses (101) et un codeur de pas (102).

## Patentansprüche

1. Verfahren für die Bestimmung des Zündzeitpunktes in einem Verbrennungsmotor, dessen Zündung durch eine elektronische Einrichtung gesteuert wird, die folgende Bauteile aufweist: einen Folgeschalter (30), eine Einrichtung (49, 50) zum Messen der Drehzahl, die einen ersten Zähler (50) für die Impulse einer Impulsfolge, die ein Drehzahlsignal während einer ersten durch den genannten Folgeschalter (30) bestimmten Meßzeit bilden, umfaßt, eine Einrichtung (56, 57, 61) zum Messen des Drucks im Sammelsaugrohr, die insbesondere einen zweiten Zähler (71) für die Impulse einer Impulsfolge, die der von einem Druckfühler während einer zweiten durch den erwähnten Folgeschalter (30) bestimmten Meßzeit entspricht, umfaßt, eine Gruppe von Lesespeichern (53, 54), Einrichtungen (51, 52) zum Adressieren der Lesespeicher ausgehend vom ersten und zweiten Zähler (50, 61), Einrichtungen (66—68, 73, 74) zur Berechnung der Zündverstellung auf Grund der in den Lesespeichern abgelesenen Werte (53, 54) und Einrichtungen (69—72, 41) zur Eingabe von Korrekturgrößen von außen, die von äußeren Parametern wie der Temperatur abhängen, wobei das Verfahren durch die Ausführung der nachstehenden Arbeitsgänge gekennzeichnet ist:

— In einem ersten Speicher (53) werden die Kennzahlen für die Zündverstellung in einer Reihenfolge gespeichert, die den aufeinanderfolgenden Strecken entspricht, die die Zündverstellkennlinie in Abhängigkeit vom Druck im Sammelsaugrohr darstellen, wobei jede Kennzahl aus mehreren Hauptbits, einem Bit für das Vorzeichen der Kennzahl und einem oder mehreren Bits, die jedes mit zumindest einigen äußeren Korrekturgrößen zusammenhängen, besteht;
— In einem zweiten Speicher (54) werden die Zündverstellwerte bie Vollast gespeichert;
— Der erste Speicher (53) wird in Abhängigkeit vom Inhalt der erwähnten ersten und zweiten Zähler (50, 61) adressiert;
— Der zweite Speicher (54) wird in Abhängigkeit vom Inhalt des erwähnten ersten Drehzahlmessers (50) adressiert;
— Auf Grund der Werte der an den so bestimmten Adressen aus dem erwähnten ersten und zweiten Speicher (53, 54) ausgegebenen Daten wird der korrigierte Wert der Zündverstellung berechnet;
— Für jene der eventuellen Korrekturen von außen, für die kein zugehöriges Bit vorgesehen ist, wird der besagte Korrekturwert durch das Anbringen der erwähnten Korrekturen von außen berichtigt;
— Bei jeder Korrektur von außen, für die ein zugehöriges Bit vorgesehen ist, wird die Korrektur von außen nur dann durchgeführt, wenn es das zugehörige Bit gestattet;
— Schließlich ist der so korrigierte endgültige

Wert an der Zündvorrichung des Motors aufzubringen.

2. Elektonische Zündverstellung für die Anwendung des Verfahrens nach Anspruch 1, dadurch gekennzeichnet, daß die Einrichtungen zur Berechnung der Zündverstellung einen Zähler (74) der Zündverstellungsberechnung umfassen, der einerseits mit den Ausgängen des zweiten Speichers (54) für die Zündverstellung bei Vollast, andererseits mit dem Ausgang ($P_{10}$) für den höchsten Stellenwert des erwähnten zweiten Druckmessers (61) über die Serienschaltung eines Binärtaktmultipliziers (66), eines Divisors durch eine ganze Zahl (M) une eine erste Weiche (73), die mit dem Ausgang der erwähnten Einrichtungen (69, 70, 71, 72, 41) für die Eingabe der Korrekturwerte von außen verbunden ist, und einer zweiten Weiche (67), die durch ihre Eingänge mit den Ausgängen des ersten Speichers (53) für die Zündverstellkennzahlen verbunden ist, und durch eine erste Gruppe von Ausgängen (63, 64, 65) mit dem erwähnten Binärtaktmultiplizierer (66) und über eine zweite Gruppe von Ausgängen mit den Einrichtungen (69—72) zur Eingabe der Zündzeitpunktkorrekturen von außen verbunden ist.

3. Steuergerät nach Anspruch 2, dadurch gekennzeichnet, daß die erwähnte Einheit von Lesespeichern einen dritten Lesespeicher (55) für die Stromführungszeit umfaßt, der vom ersten Drehzahlmesser (50) adressiert wird.

4. Elektronische Zündverstellung gemäß Anspruch 2, dadurch gekennzeichnet, daß ein Ausgang ($P_7$) des erwähnten Druckmessers (61) mit der erwähnten zweiten Weiche (67) verbunden ist, und daß zwei Ausgänge ($P_8$ und $P_9$) der erwähnten Druckmessers (61) an ihren Eingängen mit einem Adresscodierer für die erwähnten Lesespeicher (53, 54, 55) verbunden sind.

5. Elektronische Zündverstellung gemäß Anspruch 4, dadurch gekennzeichnet, daß die zweite Weiche (67) durch einen zusätzlichen Ausgang mit einem Eingang der erwähnten ersten Weiche (73) verbunden ist, um das dem Korrekturvorzeichen entsprechende Bit zu übertragen, und daß die erwähnte erste Weiche (73) durch ihre Ausgänge einerseits mit dem Auf- und Abwärtszähleingang und andererseits mit dem Taktgebereingang des Zählers der Zündverstellberechnung (74) verbunden ist.

6. Elektronische Zündverstellung nach einem der Ansprüche 2 bis 5, dadurch gekennzeichnet, daß der erwähnte Druckmesser (61) einen Eingang besitzt, der mit dem Ausgang einer ersten logischen Schaltung mit UND-Funktion (56) verbunden ist, die durch einen ersten Eingang (85) mit dem erwähnten Folgeschalter (30) verbunden ist, um einen rechteckförmigen Druckmeßimpuls zu empfangen, einen zweiten Eingang (37), der mit dem Druckfühler verbunden ist, und einen dritten Eingang (86), der mit dem Ausgang einer Gruppe von Gattern (57) verbunden ist, die ein Kapazitätsbegrenzungs- und Synchronisationssignal übertragen.

7. Elektronische Zündverstellung nach einem der Ansprüche 2 bis 6, dadurch gekennzeichnet, daß die erwähnten Adressiereinrichtungen einen Adresscodierer (100, 102) mit variablem Schritt für Lesespeicher umfassen, der zwischen dem erwähnten Drehzahlmesser (50) und den erwähnten Lesespeichern (53, 54, 55) angeordnet ist.

8. Elektronische Zündverstellung nach Anspruch 7, dadurch gekennzeichnet, daß der erwähnte Adresscodierer mit variablem Schritt eine dritte Weiche (100) für die Adresse Drehzahl/Korrektur sowie einen Adresscodierer (101) und einen Schrittcodierer (102) umfaßt.

**Claims**

1. Process for determining ignition advance in an internal combustion engine with ignition controlled by a calculator of the type comprising: a sequencer (30), a device (49, 50) for measuring the speed of rotation comprising a first counter (50) of the pulses of a train of pulses constituting a speed signal during a first measuring time determined by the said sequence (30), a device (56, 57, 61) for measuring the pressure in the intake manifold, particularly comprising a second counter (61) of pulses of a train of pulses corresponding to the frequency supplied by a pressure sensor during a second measuring time determined by the said sequencer (30), a group of read-only memories (53, 54), means (51, 52) for addressing the read-only memories from the first and second counters (50, 61), means (66—68, 73, 74) for advance calculation from values read in the read-only memories (53, 54) and means (69,—72, 41) for introducing external advance corrections as a function of external parameters such as temperature, characterized by the following method steps:

— recording in a first memory (53) the advance correction coefficients in an order which corresponds to successive straight-line segments representing the ignition advance correction curve as a function of the pressure in the intake manifold, each coefficient comprising several main binary digits, a binary digit of the sign of the coefficient and one or more binary digits each associated with at least certain external advance corrections;
— recording in a second memory (54) the full-load advance values;
— addressing the first memory (53) as a function of the contents of the said first and second counters (50, 61);
— addressing the second memory (54) as a function of the contents of the said first speed counter (50);
— calculating a corrected advance value as a function of the values of data extracted from the said first and second memories (53, 54) at addresses determined in this manner;
— correcting the said corrected value by application of the said external corrections for those of any external corrections for which no associated binary digit has been provided;
— not applying this external correction for each of those of the external corrections for which an associated binary digit has been provided unless this is authorized by the said associated binary digit;
— finally, applying the definitive value corrected in this manner to the ignition device of the motor.

2. Ignition advance calculator for carrying out the method according to Claim 1, characterised in that the advance calculating means comprise an advance calculating counter (74) which is connected, on the one hand, to the outputs of the second full-load advance memory (54) and, on the other hand, to the most significant output $(P_{10})$ of the said second pressure counter (61) via the series connection of a binary-clock multiplier (66), a divider (68) by an integral number (M) and a first controller (73) connected to the output of the said means (69, 70, 71, 72, 41) for introducing the external advance corrections, and a second controller (67) the inputs of which are linked to the outputs of the first memory (53) of advance correction coefficients and a first group of outputs (63, 64, 65) of which are connected to the said binary-clock multiplier (66) and a second group of outputs of which are connected to means (69—72) for introducing the external advance corrections.

3. Calculator according to Claim 2, characterized in that the said group of read-only memories comprises a third read-only memory (55) for conduction times, addressed from the first speed counter (50).

4. Ignition advance calculator according to Claim 2, characterized in that an output (P7) of the said pressure counter (61) is connected to the said second controller (67) and that two outputs (P8 and P9) of the said pressure counter (61) are connected to entries at a coder (51) for addressing the said read-only memories (53, 54, 55).

5. Ignition advance calculator according to Claim 4, characterized in that a supplementary output of the said second controller (67) is connected to an input of the said first controller (73) for transmitting the binary digit corresponding to the sign of the correction and that the outputs of the said first controller (73) are connected, on the one hand, to the incrementing/decrementing input and, on the other hand, to the clock input of the advance calculating counter (74).

6. Ignition advance calculator according to any of Claims 2 to 5, characterized in that the said pressure counter (61) comprises an input which is connected to the output of a first logical AND gate (56) connected with a first input (85) to the said sequencer (30) for receiving a pressure measurement pulse, a second input (37) linked to the pressure sensor and a third input (86) connected to the output of a group of gates (57) transmitting a capacity limit and synchronization signal.

7. Ignition advance calculator according to any of Claims 2 to 6, characterized in that the said addressing means comprise a variable-step coder (100, 102) for addressing the read-only memories, arranged between the said speed counter (50) and the said read-only memories (53, 54, 55).

8. Ignition advance calculator according to Claim 7, characterized in that the said variable-step addressing coder comprises a third speed/correction address controller (100), an address coder (101) and a step coder (102).

FIG_1

FIG_2

0 043 053

2/6

FIG. 3

FIG_4

0 043 053

FIG_5

FIG_6

0 043 053

FIG_7

FIG_8

FIG_9

6